# EUROPÄISCHE PATENTANMELDUNG

(11) **EP 3 916 967 A1**
(43) Veröffentlichungstag der Anmeldung: **01.12.2021**
(21) Anmeldenummer: 20177401.5
(22) Anmeldetag: 29.05.2020
(51) Int. Cl.: H02K 9/197, H02K 3/487

(54) **SPALTROHR FÜR EINE ELEKTRISCHE MASCHINE**

(71) Anmelder: Siemens Aktiengesellschaft, 80333 München (DE)
(72) Erfinder: Die Erfindernennung liegt noch nicht vor
(74) Vertreter: Michalski Hüttermann & Partner Patentanwälte mbB

(57) **Zusammenfassung**

Die vorliegende Erfindung betrifft ein Spaltrohr für eine elektrische Maschine, welches zur Anordnung in einem Luftspalt zwischen einem Stator und einem Rotor der elektrischen Maschine ausgebildet ist. Das Spaltrohr weist eine Vielzahl von Fixiervorrichtungen zum Befestigen des Spaltrohres am Stator auf. Dabei sind die Fixiervorrichtungen insbesondere derart ausgebildet und geformt, dass sie die Funktion von Nutverschlüssen des Stators ausüben, welche an den Statorzähnen fixierbar sind und somit die Befestigung am Stator bewirken.

## Beschreibung

Die vorliegende Erfindung betrifft ein Spaltrohr für eine elektrische Maschine, welches zur Anordnung in einem Luftspalt zwischen einem Stator und einem Rotor der elektrischen Maschine ausgebildet ist. Desweiteren betrifft die Erfindung eine elektrische Maschine mit einem solchen Spaltrohr.

Derartige Spaltrohre werden bspw. in flüssigkeitsgekühlten elektrischen Maschinen verwendet und dort im Luftspalt zwischen Stator und Rotor angeordnet. Das Spaltrohr übt dort eine hermetische Dichtfunktion aus und verhindert, dass eine Kühlflüssigkeit, welche bspw. zur Kühlung der Spulen des Stators eingesetzt wird, in den Luftspalt gelangt. Das Spaltrohr separiert die Kühlflüssigkeit im Statorbereich von dem sich drehenden Rotor, da dessen Drehung aufgrund der Viskosität der Kühlflüssigkeit und den sich somit ergebenden Reibungsverlusten stark behindert würde, wenn diese Flüssigkeit vom Statorbereich in den Rotorbereich gelangen würde.

Ein derartiges Spaltrohr wird bspw. in der PCT/EP2019/053016 beschrieben. Ein weiteres exemplarisches Anwendungsgebiet eines Spaltrohres könnte eine Hochtemperatursupraleiter-Maschine sein (HTSL-Maschine), bei der ein Spaltrohr zur Separierung zwischen Rotor und Stator eingesetzt wird, wenn bspw. der Stator konventionell betrieben wird und der Rotor mit HTSL-Materialien ausgeführt ist. Demnach muss der Rotor bei entsprechend niedrigen Temperaturen gehalten werden, so dass eine thermische Isolierung zwischen Rotor und Stator benötigt wird.

Bspw. für den Fall, dass in den beiden vom Spaltrohr voneinander abgetrennten Bereichen unterschiedliche Druckverhältnisse herrschen, kann es dazu kommen, dass sich das Spaltrohr aufgrund der resultierenden Druckdifferenz lokal verformt. Ein derartiges Szenario kann bspw. bei Maschinenkonzepten mit flüssigkeitsgekühltem Stator und luftgekühltem Rotor eintreten.

Ein entsprechend stabil ausgeführtes Spaltrohr würde dieser Problematik entgegen wirken. Dies könnte dadurch erreicht werden, dass das im Wesentlichen hohlzylindrische Spaltrohr dickwandig ausgeführt wird. Dies würde jedoch bedingen, dass auch der Luftspalt, in dem das Spaltrohr angeordnet ist, dementsprechend dimensioniert ist, dass zum Einen das dickwandige Spaltrohr dort angeordnet werden kann und zum Anderen auch noch der grundsätzlich notwendige Abstand zwischen den im Betrieb rotierenden und still stehenden Komponenten der Maschine gewahrt bleibt. Da sich eine anwachsende radiale Erstreckung des Luftspaltes negativ auf die Leistung und die elektrischen Verluste der elektrischen Maschine auswirkt, ist ein dickwandiges Spaltrohr eine nachteilige Lösung des genannten Problems.

Auch die zwischenzeitlich wie bspw. in PCT/EP2019/053016 vorgeschlagenen Spaltrohre aus faserverstärkten Verbundwerkstoffen lassen noch keine dünnwandigen Spaltrohre zu, da die bspw. im Vergleich zu Metallen niedrigere Medienbarriere der Faserverbundwerkstoffe gegen ein Durchdringen von Flüssigkeiten geringe Wandstärken für die Herstellung von Spaltrohren erschwert.

Es ist daher eine Aufgabe der vorliegenden Erfindung, ein Spaltrohr für eine elektrische Maschine mit erhöhter Stabilität gegen Verformung anzugeben.

Diese Aufgabe wird mit Hilfe des in Anspruch 1 beschriebenen Spaltrohres sowie mit dem Stator nach Anspruch 8 und der elektrischen Maschine nach Anspruch 14 gelöst. Die Unteransprüche beschreiben vorteilhafte Ausgestaltungen.

Ein solches Spaltrohr für eine elektrische Maschine ist ausgebildet, um in einem Luftspalt zwischen einem Rotor und einem Stator der elektrischen Maschine angeordnet zu werden, um Stator und Rotor gegeneinander abzudichten. Das Spaltrohr weist nun Fixiervorrichtungen zur insbesondere radialen Fixierung des Spaltrohres an Statorzähnen des Stators der elektrischen Maschine zum Unterbinden von lokalen radialen Verformungen auf. Die Fixierung bewirkt, dass die einleitend beschriebenen Verformungen nicht auftreten können. Das Spaltrohr kann demnach bspw. vergleichsweise dünnwandig ausgeführt werden, so dass auch die radiale Erstreckung des Luftspalts mit der entsprechenden Wirkung auf die erreichbare Leistung der Maschine minimiert werden kann

Die Fixiervorrichtungen sind als Nutverschlüsse für den Stator ausgebildet, welche ihrerseits an den Statorzähnen des Stators fixierbar sind. Ein jeweiliger Nutverschluss ist ausgebildet, um jeweils eine zwischen zwei benachbarten Statorzähnen liegende Statornut insbesondere derart zu verschließen, dass auf diesen Statorzähnen positionierte Statorwicklungen nicht verrutschen. Somit erfüllt das Spaltrohr vorteilhafterweise neben seiner eigentlichen Funktion auch diejenige der von der elektrischen Maschine ebenfalls benötigten Nutverschlüsse und kann gleichzeitig auf die für derartige Nutverschlüsse vorgesehenen Fixiereinrichtungen zurückgreifen.

Die Fixiervorrichtungen und das Spaltrohr sind originär als separate Bauteile hergestellt, wobei die Fixiervorrichtungen stoffschlüssig mit dem Spaltrohr verbunden sind, bspw. mit Hilfe eines Klebe- oder Schweißverfahrens. Alternativ oder zusätzlich zur stoffschlüssigen Verbindung können die Fixiervorrichtungen formschlüssig mit dem Spaltrohr verbunden sein. In beiden Fällen wird eine Befestigung des Spaltrohres an den Fixiervorrichtungen und damit letztlich am Stator bewirkt.

Die formschlüssigen Verbindungen können bspw. jeweils nach Art einer typischerweise starken und gleichzeitig leicht zu erstellenden Nut-Feder-Verbindung, insbesondere nach Art einer Schwalbenschwanzverbindung, ausgeführt sein.

In einer alternativen Ausführeung sind das Spaltrohr und die Fixiervorrichtungen als einstückiges, integriertes Bauteil ausgeführt. Diese Ausführung ist besonders stabil und erlaubt eine vergleichsweise wenig aufwändige Montage des Spaltrohres in der Maschine.

Die jeweils an den beiden tangentialen Enden der Fixiervorrichtungen liegenden Endbereiche der Fixiervorrichtungen sind jeweils derart geformt, dass sie, jeweils eine formschlüssige Verbindung bildend, in an den tangentialen Oberflächen der Statorzähne vorgesehene Ausnehmungen eingreifen, so dass die radiale Fixierung bewirkt wird.

Ein entsprechender Stator einer elektrischen Maschine weist eine Vielzahl von Statorzähnen auf, wobei ein jeder Statorzahn ausgebildet ist, um eine oder mehrere Wicklungen eines Statorwicklungssystems zu tragen. Dabei weist ein jeder Statorzahn in seinem jeweiligen Zahnkopfbereich an jeder seiner beiden tangentialen Stirnflächen, d.h. an denjenigen Stirnflächen, die einem benachbarten Statorzahn zugewandt sind, jeweils eine Fixiereinrichtung zum insbesondere radialen Fixieren eines Nutverschlusses aufweist. Desweiteren ist am Stator das oben beschriebene Spaltrohr derart angeordnet, dass die Fixiervorrichtungen des Spaltrohres und die Fixiereinrichtungen des Stators derart ineinander greifen, dass das Spaltrohr mit den oben genannten Vorteilen an den Statorzähnen des Stators in insbesondere radialer Richtung fixiert ist.

Zwischen zwei in tangentialer Richtung benachbarten Statorzähnen ist jeweils ein Nutverschluss insbesondere zum Fixieren einer auf dem jeweiligen Zahn zu positionierenden Wicklung angeordnet. Diese Nutverschlüsse sind vorteilhafterweise durch die Fixiervorrichtungen des Spaltrohres gebildet, so dass separate Bauteile nicht benötigt werden. Mit anderen Worten sind also die Fixiervorrichtungen als Nutverschlüsse für die Nuten des Stators ausgebildet.

Das Spaltrohr kann zusätzlich stoffschlüssig mit den dem Spaltrohr zugewandten radialen Oberflächen der Statorzähne verbunden sein, so dass auch dort keine Verformungen des Spaltrohres auftreten können.

Die Fixiereinrichtungen des Stators sind als sich in einer im Wesentlichen axialen Richtung erstreckende und somit eine signifikante Rückhaltekraft in radialer Richtung bewirkende Ausnehmungen in den tangentialen Oberflächen der Statorzähne ausgebildet. Die Ausnehmungen sind derart bspw. komplementär zu Endbereichen der Fixiervorrichtungen des Spaltrohres ausgebildet, dass eine jeweilige Fixiervorrichtung des Spaltrohres formschlüssig mit einer jeweiligen Fixiereinrichtung des Stators verbindbar ist. Dies unterstützt die radiale Fixierung des Spaltrohres am Stator.

Die Fixiervorrichtungen des Spaltrohres weisen jeweils an den beiden tangentialen Enden einer jeweiligen Fixiervorrichtung liegende Endbereiche auf. Die Endbereiche können derart geformt sein, dass sie, jeweils die formschlüssige Verbindung bildend, in die an den Statorzähnen vorgesehene Ausnehmungen eingreifen, so dass die radiale Fixierung bewirkt wird.

Die Statorzähne des Stators können derart ausgebildet sein, dass sich jeweils ein Zahnkopfbereich eines Statorzahns in positiver und negativer tangentialer Richtung über einen Zahnhalsbereich dieses Statorzahnes hinaus erstreckt. In diesem Fall bilden die somit tangential überhängenden Zahnkopfbereiche die Fixiereinrichtungen dieses Statorzahnes. D.h. die oben genannten Ausnehmungen sind nicht vonnöten. Die Fixiervorrichtungen bzw. Nutverschlüsse werden einfach aus Sicht des Spaltrohres hinter den überhängenden Zahnkopfbereichen positioniert, so dass letztere zwischen Spaltrohr und Endbereichen des Nutverschlusses liegen und damit die radiale Fixierung erreicht wird.

Eine entsprechende elektrische Maschine weist einen Rotor und einen Stator mit einem daran angeordneten Spaltrohr wie oben beschrieben auf.

Weitere Vorteile und Ausführungsformen ergeben sich aus den Zeichnungen und der entsprechenden Beschreibung.

Kurz zusammengefasst weist das Spaltrohr also eine Vielzahl von Fixiervorrichtungen zum Befestigen des Spaltrohres am Stator auf. Dabei sind die Fixiervorrichtungen insbesondere derart ausgebildet und geformt, dass sie die Funktion von Nutverschlüssen des Stators ausüben, welche an den Statorzähnen fixierbar sind und somit die Befestigung am Stator bewirken. Das der Erfindung zu Grunde liegende Konzept liegt somit letztlich darin, das Spaltrohr mit den in den zwischen den Statorzähnen liegenden Zwischenräumen bzw. Nuten fixierten Nutverschlüssen zu koppeln und damit diese vorhandene Fixierung auszunutzen, um lokale Verformungen zu unterdrücken. Nutverschlüsse, deren Aufgabe in der elektrischen Maschine sowie ihre Funktionsweise sind an sich bekannt, bspw. aus der EP3073616B1 oder auch aus EP3251196B1.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall kann bei der Ausführungsform der zweiten Figur davon ausgegangen werden, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert. Desweiteren werden der Übersichtlichkeit wegen teilweise nicht sämtliche Bezugszeichen in sämtlichen Figuren dargestellt, sondern nur diejenigen, auf die in der Beschreibung der jeweiligen Figur Bezug genommen wird.

Es zeigen:
- FIG 1: einen einen Rotor und einen Stator zeigenden Ausschnitt einer aus dem Stand der Technik bekannten elektrischen Maschine,
- FIG 2: den Ausschnitt der elektrischen Maschine mit einem verformten Spaltrohr,
- FIG 3: den Ausschnitt der elektrischen Maschine mit einem erfindungsgemäßen Spaltrohr,
- FIG 4: das Spaltrohr in einer dritten Ausführungsform,
- FIG 5: den Ausschnitt der elektrischen Maschine mit einem erfindungsgemäßen Spaltrohr in einer weiteren Variante,
- FIG 6: den Ausschnitt der elektrischen Maschine mit wesentlich reduzierten verformbaren Bereichen des Spaltrohres.

Es sei angemerkt, dass sich Begriffe wie "axial", "radial", "tangential" etc. auf die in der jeweiligen Figur bzw. im jeweils beschriebenen Beispiel zum Einsatz kommende Achse beziehen. Mit anderen Worten beziehen sich die Richtungen axial, radial, tangential stets auf eine Drehachse des Rotors und damit auf die entsprechende Symmetrieachse des Stators. Dabei beschreibt "axial" eine Richtung parallel zur Achse, "radial" beschreibt eine Richtung orthogonal zur Achse, auf diese zu oder auch von ihr weg, und "tangential" ist eine Richtung, die in konstantem radialen Abstand zur Achse und bei konstanter Axialposition kreisförmig um die Achse herum gerichtet ist. Der Ausdruck "in Umfangsrichtung" ist mit "tangential" gleichzusetzen.

Im Bezug auf eine Fläche, bspw. eine Querschnittsfläche, beschreiben die Begriffe "axial", "radial", "tangential" etc. die Orientierung den Normalenvektors der Fläche, d.h. desjenigen Vektors, der senkrecht auf der betroffenen Fläche steht.

Der Begriff "benachbart" soll im Zusammenhang mit Bauteilen, bspw. mit Spulen oder Statorzähnen, ausdrücken, dass sich im Falle von "benachbarten Bauteilen" zwischen diesen beiden Bauteilen insbesondere kein weiteres derartiges Bauteil befindet, sondern höchstens ein leerer Zwischenraum oder ggf. ein andersartiges Bauteil.

Unter dem Ausdruck "koaxiale Bauteile", bspw. koaxiale Komponenten wie Rotor und Stator, werden hier Bauteile verstanden, die gleiche Normalenvektoren aufweisen, für die also die von den koaxialen Bauteilen definierten Ebenen parallel zueinander sind. Desweiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

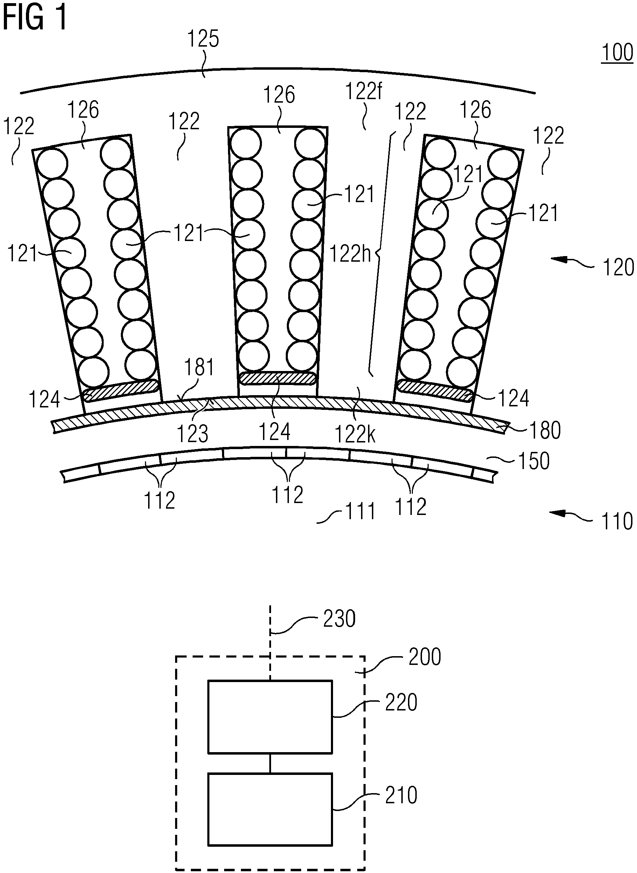

Die FIG 1 zeigt stark vereinfacht eine axiale Sicht auf einen Ausschnitt einer elektrischen Maschine 100 eines Systems 1, welche bspw. als Elektromotor ausgebildet sein kann. wie sie im Stand der Technik bekannt ist. Es sei erwähnt, dass die elektrische Maschine 100 in ähnlichem Aufbau grundsätzlich auch als Generator betrieben werden kann. Weiterhin sei betont, dass der Aufbau der im Folgenden beschriebenen Maschine 100 stark vereinfacht ist und lediglich zur Veranschaulichung der grundsätzlichen Funktionsweise des Elektromotors bzw. der elektrischen Maschine dient. Es kann als bekannt vorausgesetzt werden, dass je nach konkreter gewünschter Ausbildung der elektrischen Maschine 100 als Generator oder als Elektromotor und/oder als bspw. Radial- oder Axialflussmaschine mit einem als Innen- oder auch als Außenläufer ausgebildeten Rotor etc. die verschiedenen Komponenten der Maschine 100 unterschiedlich angeordnet sein können.

Der Elektromotor 100 weist einen im Wesentlichen ringförmige bzw. hohlzylindrische Stator 120 sowie einen hier exemplarisch als Innenläufer ausgebildeten, im Wesentlichen zylindrischen Rotor 110 auf, wobei der Rotor 110 innerhalb des Stators 120 und konzentrisch zu dieser angeordnet ist und im Betriebszustand des Elektromotors 100 um eine Rotationsachse rotiert. Der Rotor 110 weist erste magnetische Mittel 112 auf, die bspw. als Permanentmagnete 112 ausgebildet und an einer dem Stator 120 zugewandten Oberfläche des Rotorgrundkörpers 111 angeordnet sein können. Dies ist in FIG 1 nur schematisch angedeutet, ohne bspw. auf Mittel einzugehen, die die Magnete 112 auch bei schnell drehendem Rotor 110 an diesem fixieren. Abweichend von der exemplarischen Darstellung könnte der Rotor 110 auch mit "vergrabenen" Magneten, als Kurzschlussläufer oder mit gewickelten Polen ausgeführt sein. Der Rotor 110 bzw. sein im Wesentlichen zylindrischer Rotorgrundkörper 111 ist drehfest mit einer hier nicht dargestellten Welle verbunden, so dass eine Rotation des Rotors 110 über die Welle auf eine ebenfalls nicht dargestellte anzutreibende Komponente, bspw. auf eine Komponente eines Antriebssystems eines weiteren Systems übertragbar ist.

Der Stator 120 weist eine Vielzahl von einzelnen Statorzähnen 122 sowie zweite magnetische Mittel 121 auf, die bspw. als Wicklungen 121 eines Statorwicklungssystems realisiert sein können. Jeder Statorzahn 122 weist einen dem Rotor 110 der Maschine 100 zugewandten Zahnkopf 122k, einen vom Rotor 110 abgewandten Zahnfuß 122f und einen zwischen Zahnkopf 122k und Zahnfuß 122f angeordneten Zahnhals 122h auf. Dies ist der Übersichtlichkeit wegen nur für einen der Statorzähne 122 dargestellt. Die Zahnfüße 122f sind mit einem Statorjoch 125 des Stators 120 verbunden oder bilden dieses selbst.

Die Wicklung 121 eines jeweiligen Statorzahnes 122 ist jeweils im Bereich des Zahnhalses 122h zwischen Zahnfuß 122f und Zahnkopf 122k auf den jeweiligen Statorzahn 122 gewickelt. Demnach befinden sich in einer jeweiligen Statornut 126 zwischen zwei in tangentialer Richtung benachbarten Statorzähnen 122 Abschnitte der auf diesen beiden Statorzähnen 122 angeordneten Wicklungen 121. Es sei betont, dass die vorliegende Erfindung nicht auf eine Anwendung mit Zahnspulen beschränkt ist. Bei den Wicklungen 121 kann es sich bspw. um Einschicht-, Zweischicht-, Zahnspulen- oder verteilte Wicklungen handeln.

Um die in einer jeweiligen Nut 126 befindlichen Abschnitte der jeweiligen Wicklungen 121 vor Beschädigungen zu schützen und um insbesondere sicher zu stellen, dass die Wicklungen 121 an Ort und Stelle verbleiben und in radialer Richtung nicht verrutschen, sind bspw. als Nutverschlusskeile ausgebildete Nutverschlüsse 124 vorgesehen. Diese sind zwischen zwei benachbarten Statorzähnen 122 im Bereich der Zahnköpfe 122k dieser Zähne 122 angeordnet und verschließen die zwischen diesen Zähnen 122 gebildete Statornut 126.

In einem zwischen dem Rotor 110 und dem Stator 120 und dabei insbesondere zwischen den Permanentmagneten 112 und den Statorzähnen 122 befindlichen im Wesentlichen hohlzylindrischen Luftspalt 150 befindet sich ein ebenfalls im Wesentlichen hohlzylindrisches Spaltrohr 180. Dieses ist im Luftspalt 150 derart angeordnet, dass es den Rotor 110 und den Stator 120 wie einleitend bereits erwähnt hermetisch voneinander trennt. Dabei liegt das Spaltrohr 180 mit seiner dem Stator 120 zugewandten radialen Oberfläche 181 am Stator 120 und insbesondere an den dem Spaltrohr 180 und dem Rotor 110 zugewandten Oberflächen 123 der Statorzähne 122 an. Dies ist der Übersichtlichkeit wegen nur an einem der Statorzähne 122 mit entsprechenden Bezugszeichen gekennzeichnet.

Jede der auf einen jeweiligen Statorzahn 122 des Stators 120 gewickelt Wicklungen 121 bzw. jedes entsprechende magnetische Mittel 121 ist im Betriebszustand des Elektromotors 100 von einem elektrischen Strom durchflossen, so dass in bekannter Weise magnetische Felder erzeugt werden. Die ersten und die zweiten magnetischen Mittel 112, 121 sind derart ausgebildet und durch den Luftspalt 150 voneinander beabstandet zueinander angeordnet, dass sie im Betriebszustand des Elektromotors 100 elektromagnetisch miteinander wechselwirken. Dieses Konzept einschließlich der Bedingungen für die Ausbildung und genaue Anordnung der magnetischen Mittel 112, 121 bzw. von Rotor 110 und Stator 120 sind an sich bekannt und werden daher im Folgenden nicht näher erläutert. Es sei lediglich erwähnt, dass zum Betreiben der elektrischen Maschine 100 als Elektromotor das Statorwicklungssystem bzw. dessen Wicklungen 121 mit Hilfe einer lediglich schematisch angedeuteten Stromquelle 200 mit den genannten elektrischen Strömen beaufschlagt werden, die bewirken, dass die Wicklungen 121 dementsprechende Magnetfelder erzeugen, welche mit den Magnetfeldern der Permanentmagnete 112 des Rotors 110 in elektromagnetische Wechselwirkung treten. Dies resultiert darin, dass auf die Permanentmagnete 112 ein Drehmoment in einer tangentialen Richtung bzw. Umfangsrichtung wirkt, welches unter der Voraussetzung, dass die Permanentmagnete 112 ausreichend fest mit dem Rotorgrundkörper 111 verbunden sind, darin resultiert, dass bei geeigneter Ausbildung und Anordnung der genannten Komponenten zueinander der Rotor 110 und mit ihm die Welle in Rotation versetzt werden.

Die Stromquelle 200 umfasst eine elektrische Energiequelle 210, bspw. eine Batterie oder einen elektrischen Generator, und eine Leistungselektronik 220, die die von der Energiequelle 210 bereit gestellte elektrische Energie über die mit der gestrichelten Linie 230 angedeutete elektrische Verbindung in das momentan vom Elektromotor 100 zum Erbringen der bspw. von einem Betreiber des Systems 1 angeforderten Leistung benötigte Strom-/Spannungssignal wandelt.

Dieses auf der elektromagnetischen Wechselwirkung fußende Konzept der Ausbildung der elektrischen Maschine 100 als Elektromotor kann als bekannt vorausgesetzt werden. Auch die alternative Konfiguration und Verwendung der elektrischen Maschine 100 als Generator kann als bekannt vorausgesetzt werden. In letzterem Betriebsmodus ist in der FIG 1 insbesondere die Komponente 210 als Verbraucher zu verstehen, bspw. wiederum als aufladbare Batterie und/oder als Elektromotor. Ein vom Generator 100 geliefertes Strom-/Spannungssignal wird von der Leistungselektronik 220 in ein vom Verbraucher 210 verarbeitbares Strom-/Spannungssignal gewandelt. Beide Ausbildungen der elektrischen Maschine 100 werden aufgrund der Bekanntheit der Konzepte im Folgenden nicht weiter detailliert.

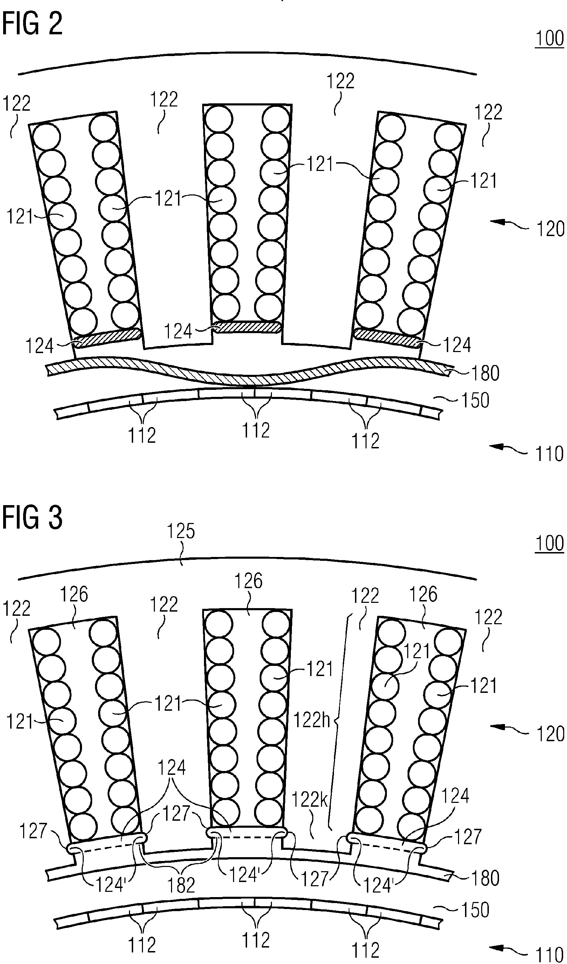

Aufgrund der unmittelbaren Auswirkung des radialen Abstands der magnetischen Mittel 112, 121 voneinander auf die Leistung bzw. das Drehmoment der elektrischen Maschine 100 wird angestrebt, die radiale Erstreckung des Luftspalts 150 zu minimieren. Dementsprechend wird auch die radiale Erstreckung bzw. Dicke des im Luftspalt 150 angeordneten Spaltrohres 180 optimiert und möglichst minimiert. Eine reduzierte Dicke des Spaltrohres 180 hat wiederum direkten Einfluss auf die Belastbarkeit und Stabilität des Spaltrohres 180. Die FIG 2 zeigt eine mögliche Konsequenz einer reduzierten Belastbarkeit des Spaltrohres 180. Dargestellt ist eine Situation, bei der es bspw. aufgrund von entsprechenden Druckverhältnissen bzw. -differenzen der Kühlmittel o.ä. in Rotor 110 und Stator 120 zu einer erheblichen lokalen Verformung des Spaltrohres 180 kommt. Dies kann diverse Konsequenzen haben, bspw. Risse im Spaltrohr 180 und/oder eine Berührung von Spaltrohr 180 und Rotor 110, was sich letztlich in einem Leistungseinbruch niederschlagen oder sogar zu einer Beschädigung dieser Komponenten der Maschine 100 führen kann.

Die FIG 3 zeigt eine erste Ausführungsform eines Spaltrohres 180, bei dem die in FIG 2 dargestellte erhebliche Verformung dadurch verhindert wird, dass das Spaltrohr 180 mit Hilfe von Fixiervorrichtungen, welche durch die Nutverschlüsse 124 gebildet sind, an den Statorzähnen 122 fixiert ist.

Hierzu weisen die Statorzähne 122 ihrerseits Fixiereinrichtungen 127 auf. Diese Fixiereinrichtung können bspw. als Ausnehmungen 127 realisiert sein, die an den tangentialen, also an den den jeweils benachbarten Statorzähnen 122 zugewandten Stirnflächen des jeweiligen Statorzahnes 122 im Bereich des jeweiligen Zahnkopfes 122k vorgesehen sind und in die die Endbereiche 124' der zwischen diesen Statorzähnen 122 angeordneten Nutverschlüsse 124 derart eingebracht sind, dass sich formschlüssige Verbindungen zwischen jeweiligem Zahn 122 und dem dort angeordneten Nutverschluss 124 ergeben. Die Ausnehmungen 127 können bspw. in axialer Richtung verlaufende Nuten sein, in die die entsprechend ausgebildeten Endbereiche 124' eines jeweiligen Nutverschlusses 124 formschlüssig eingesetzt werden können. Hierzu können die Formen von Endbereich 124' und Ausnehmung 127 bspw. komplementär zueinander sein. Diese formschlüssigen Verbindungen bewirken jeweils, dass der so angeordnete Nutverschluss 124 insbesondere in der radialen Richtung fixiert ist. Die komplementäre Ausbildung von Endbereich 124' und Ausnehmung 127 ist jedoch nicht zwingend. Bspw. können auch Ausnehmungen 127 mit halbrundem Querschnitt oder generell mit kleinen Radien in Verbindung mit rechtwinklig abgeschlossenen Endbereichen 124' einen ausreichenden Formschluss in radialer Richtung bewirken.

Die angestrebte Fixierung des Spaltrohres 180 an den Statorzähnen 122 ergibt sich nun dadurch, dass das Spaltrohr 180 fest mit den Nutverschlüssen 124 verbunden ist, so dass deren Fixierung an den Statorzähnen 122 die erwünschte Fixierung des Spaltrohres 180 an den Statorzähnen 122 bewirkt. Dies bewirkt, dass eine ggf. bestehende Druckdifferenz wie eingangs erläutert nicht mehr allein durch das Spaltrohr 180 kompensiert werden muss, sondern auf die Statorzähne 122 übertragen wird.

Die Verbindung zwischen Nutverschlüssen 124 und Spaltrohr 180 wird in der ersten Ausführungsform dadurch erreicht, dass Spaltrohr 180 und Nutverschlüsse 124 als integriertes, einstückiges Bauteil realisiert sind, bspw. mit Hilfe eines additiven Fertigungsverfahrens. Die in FIG 3 dargestellte gestrichelte Linie zwischen Nutverschlüssen 124 und Spaltrohr 180 deutet an, dass das einstückige Bauteil quasi eine dem Spaltrohr 180 entsprechende Sektion sowie eine Vielzahl von den Nutverschlüssen 124 entsprechende Sektionen umfasst.

Diese Sektionen sind in der FIG 3 durch Übergangsbereiche 182 verbunden, welches ebenfalls zum einstückigen Bauteil zu zählen ist. Diese Übergangsbereiche 182 können, müssen jedoch nicht zwangsläufig, wie in der FIG 3 massiv ausgeführt sein und sich dabei über die gesamte Breite und Länge der jeweiligen Nut 126 erstrecken.

In einer zweiten Ausführungsform sind das Spaltrohr 180 und die Nutverschlüsse 124 als separate Bauteile realisiert. Die Verbindung 128 zwischen ihnen kann dann als stoffschlüssige Verbindung realisiert werden, bspw. mit Hilfe eines Klebe- oder Schweißverfahrens und bspw. an den Orten, die in FIG 3 mit den gestrichelten Linien gekennzeichnet sind.

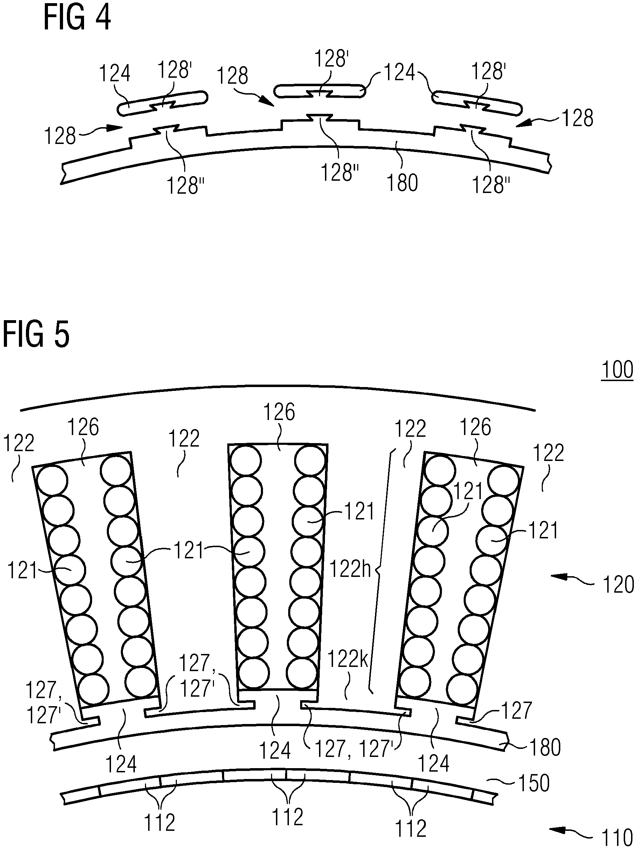

In einer dritten Ausführungsform, die in der FIG 4 angedeutet ist, kann eine Verbindung 128 zwischen Spaltrohr 180 und Nutverschlüssen 124 als formschlüssige Verbindung umgesetzt werden, bspw. nach Art einer Nut-Feder-Verbindung. Dabei zeigt FIG 4 der Übersichtlichkeit wegen nicht Stator 120 und Rotor 110, sondern lediglich einen Ausschnitt des Spaltrohres 180 wie bereits in den anderen Figuren sowie einige wenige Nutverschlüsse 124, wobei Spaltrohr 180 und Nutverschlüsse 124 in der Darstellung noch nicht miteinander verbunden sind. Wenn Spaltrohr 180 und Nutverschlüsse 124 der dritten Ausführungsform miteinander verbunden und in die elektrische Maschine 100 eingebaut sind, ergibt sich letztlich eine Ansicht wie diejenige der FIG 3 und insbesondere auch die Funktion des in FIG 3 dargestellten Spaltrohres 180, nämlich eine Fixierung an den Statorzähnen 122.

Zur Realisierung der formschlüssigen Verbindung zwischen Spaltrohr 180 und Nutverschlüssen 124 kann bspw. jeder Nutverschluss 124 an seiner dem Spaltrohr 180 zugewandten Oberfläche eine nutartige Vertiefung 128' aufweisen und das Spaltrohr 180 weist dementsprechend an seiner den Nutverschlüssen 124 zugewandten Oberfläche zur Vertiefung 128' komplementäre Vorsprünge 128" auf. Die Vertiefung 128' erstreckt sich in der radialen Richtung in den jeweiligen Nutverschluss 124 hinein, während sich die Vorsprünge 128" am Spaltrohr 180 in der radialen Richtung Spaltrohr 180 weg erstrecken. Aufgrund der zueinander komplementären Ausbildungen von Vertiefungen 128' und Vorsprüngen 128" kann ein jeweiliger Vorsprung 128" passgenau und eine formschlüssige Verbindung bildend innerhalb der jeweiligen Vertiefung 128' positioniert werden.

Die in der FIG 4 gewählte formschlüssige Verbindung ist exemplarisch als Schwalbenschanzverbindung ausgebildet. Dementsprechend haben die Vorsprünge 128" am Spaltrohr 180 jeweils einen in der axialen Richtung gesehen im Wesentlichen trapezförmigen Querschnitt, wobei dessen kurze Seite dem Spaltrohr 180 zugewandt und die lange Seite vom Spaltrohr 180 abgewandt ist. Die Vertiefungen 128' sind komplementär hierzu geformt.

Natürlich können Vertiefungen 128' und Vorsprünge 128" auch umgekehrt angeordnet sein, d.h. Vertiefungen 128' am Spaltrohr 180 und Vorsprünge 128" an den Nutverschlüssen 124. Dies ist nicht separat in einer Figur dargestellt.

Es sei erwähnt, dass in der dritten Ausführungsform die formschlüssige Verbindung zwischen Spaltrohr 180 und Nutverschlüssen 124 durch eine zusätzliche stoffschlüssige Verbindung an den sich ergebenden Verbindungsstellen zwischen diesen Komponenten 180, 124 unterstützt werden kann.

Unabhängig davon, entsprechend welcher Ausführungsform die Verbindungen zwischen Spaltrohr 180 und Nutverschlüssen 124 realisiert sind, sind die Nutverschlüsse 124 jeweils mit Hilfe der Ausnehmungen 127 an den Statorzähnen 122 fixiert.

In einer Variante hierzu, die in der FIG 5 dargestellt ist und die ebenfalls basierend auf jeder der beschriebenen drei Ausführungsformen der Verbindung zwischen Spaltrohr 180 und Nutverschlüssen 124 realisiert werden kann, wird davon ausgegangen, dass die Statorzähne 122 derart ausgebildet sind, dass sich jeweils ein Zahnkopf 122k eines Statorzahns 122 in positiver und negativer tangentialer Richtung über den Zahnhals 122h dieses Statorzahnes 122, an dem die jeweilige Wicklung 121 angeordnet ist, hinaus erstreckt und dementsprechend in diesen tangentialen Richtungen überhängende Bereiche 127 aufweist. Diese überhängenden Bereiche 127', die u.a. auch eine verbesserte Führung des magnetischen Flusses bewirken, übernehmen in der in FIG 5 skizzierten Variante die Funktion der Fixiereinrichtung 127 des Stators 120. Dadurch, dass sich die tangential überhängenden Bereiche 127' der Statorzähne 122 in der radialen Richtung zwischen Spaltrohr 180 und Nutverschlüssen 124 befinden und desweiteren Spaltrohr 180 und Nutverschlüsse 124 wie beschrieben fest miteinander verbunden sind, werden radiale Verformungen des Spaltrohres 180 in diesen Bereichen unterbunden.

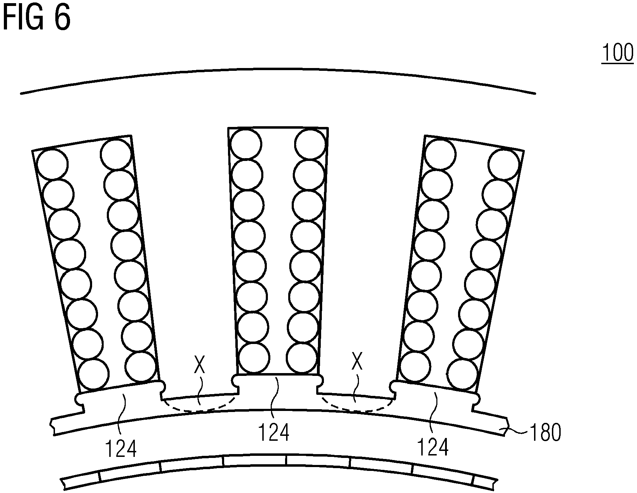

Die FIG 6 zeigt schließlich die Wirkung des mit den als Nutverschlüssen 124 ausgebildeten Fixiervorrichtungen ausgestatteten Spaltrohres 180. Der Übersichtlichkeit wegen wurde in FIG 6 weitestgehend auf Bezugszeichen verzichtet. Insbesondere im Vergleich mit FIG 2 fällt auf, dass nun nur noch lokal sehr begrenzte und wesentlich weniger schädliche Verformungen X des Spaltrohres 180 möglich sind. Diese sind durch die gestrichelten Linien angedeutet. Derartige Verformungen können jedoch dadurch verhindert werden, dass das Spaltrohr 180 zusätzlich stoffschlüssig mit den dem Spaltrohr 180 zugewandten radialen Oberflächen 123 der Statorzähne 122 verbunden ist.

Sowohl das Spaltrohr 180 als auch die Nutverschlüsse 124 bzw. Fixiervorrichtungen 124 können bspw. aus einem geeigneten Metall, aus einem Polymer oder aus einem faser- oder glasfaserverstärkten Verbundwerkstoff gefertigt sein.

### Bezugszeichenliste

- 100: elektrische Maschine
- 110: Rotor
- 111: Rotorgrundkörper
- 112: Permanentmagnet
- 120: Stator
- 121: Wicklung
- 122: Statorzahn
- 122f: Zahnfuß
- 122h: Zahnhals
- 122k: Zahnkopf
- 123: radiale Oberfläche
- 124: Nutverschluss, Fixiervorrichtung
- 124': Endbereich
- 125: Statorjoch
- 126: Statornut
- 127: Fixiereinrichtung, Ausnehmung
- 127': überhängender Zahnkopfbereich
- 128: Verbindung
- 128': nutartige Vertiefung
- 128": komplementärer Vorsprung
- 150: Luftspalt
- 180: Spaltrohr
- 181: radiale Oberfläche
- 182: Übergangsbereich
- 200: Stromquelle
- 210: elektrische Energiequelle
- 220: Leistungselektronik
- 230: elektrische Verbindung
- X: Verformung

## Patentansprüche

1. Spaltrohr (180) für eine elektrische Maschine (100), welches ausgebildet ist, um in einem Luftspalt (150) zwischen einem Rotor (110) und einem Stator (120) der elektrischen Maschine (100) angeordnet zu werden, um Stator (120) und Rotor (110) gegeneinander abzudichten,
**dadurch gekennzeichnet, dass**
das Spaltrohr (180) Fixiervorrichtungen (124) zur insbesondere radialen Fixierung des Spaltrohres (180) an Statorzähnen (122) des Stators (120) aufweist.

2. Spaltrohr (180) nach Anspruch 1, **dadurch gekennzeichnet, dass** die Fixiervorrichtungen (124) als Nutverschlüsse (124) für den Stator (120) ausgebildet sind, welche an den Statorzähnen (122) des Stators (120) fixierbar sind.

3. Spaltrohr (180) nach einem der Ansprüche 1 bis 2, **dadurch gekennzeichnet, dass** die Fixiervorrichtungen (124) stoffschlüssig mit dem Spaltrohr (180) verbunden sind.

4. Spaltrohr (180) nach einem der Ansprüche 1 bis 3, **dadurch gekennzeichnet, dass** die Fixiervorrichtungen (124) formschlüssig mit dem Spaltrohr (180) verbunden sind.

5. Spaltrohr (180) nach Anspruch 4, **dadurch gekennzeichnet, dass** die formschlüssigen Verbindungen (128) jeweils nach Art einer Nut-Feder-Verbindung, insbesondere nach Art einer Schwalbenschwanzverbindung, ausgeführt sind.

6. Spaltrohr (180) nach einem der Ansprüche 1 bis 2, **dadurch gekennzeichnet, dass** das Spaltrohr (180) und die Fixiervorrichtungen (124) als einstückiges Bauteil ausgeführt sind.

7. Spaltrohr (180) nach einem der Ansprüche 1 bis 6, **dadurch gekennzeichnet, dass** an den beiden tangentialen Enden liegende Endbereiche (124') der Fixiervorrichtungen (124) jeweils derart geformt sind, dass sie, jeweils eine formschlüssige Verbindung bildend, in an den Statorzähnen (122) vorgesehene Ausnehmungen (127) eingreifen, so dass die radiale Fixierung bewirkt wird.

8. Stator (120) einer eine Vielzahl von Statorzähnen (122) aufweisenden elektrischen Maschine (100), wobei ein jeder Statorzahn (122) an jeder seiner beiden tangentialen Stirnflächen jeweils eine Fixiereinrichtung (127) zum insbesondere radialen Fixieren eines Nutverschlusses (124) aufweist, **dadurch gekennzeichnet, dass** am Stator (120) ein Spaltrohr (180) nach einem der Ansprüche 1 bis 7 derart angeordnet ist, dass die Fixiervorrichtungen (124) des Spaltrohres (180) und die Fixiereinrichtungen (127) des Stators (120) derart ineinander greifen, dass das Spaltrohr (180) an den Statorzähnen (122) des Stators (120) in insbesondere radialer Richtung fixiert ist.

9. Stator (120) nach Anspruch 8, **dadurch gekennzeichnet, dass** zwischen zwei in tangentialer Richtung benachbarten Statorzähnen (122) jeweils ein Nutverschluss (124) angeordnet ist, wobei die Nutverschlüsse (124) durch die Fixiervorrichtungen (124) des Spaltrohres (180) gebildet sind.

10. Stator (120) nach einem der Ansprüche 8 bis 9, **dadurch gekennzeichnet, dass** das Spaltrohr (180) stoffschlüssig mit den dem Spaltrohr (180) zugewandten radialen Oberflächen (123) der Statorzähne (122) verbunden ist.

11. Stator (120) nach einem der Ansprüche 8 bis 10, **dadurch gekennzeichnet, dass** die Fixiereinrichtungen (127) des Stators (120) als sich in einer im Wesentlichen axialen Richtung erstreckende Ausnehmungen (127) in den tangentialen Oberflächen der Statorzähne (122) ausgebildet sind, wobei die Ausnehmungen (127) derart ausgebildet sind, dass eine jeweilige Fixiervorrichtung (124) des Spaltrohres (180) formschlüssig mit einer jeweiligen Fixiereinrichtung (127) des Stators (120) verbindbar ist.

12. Stator nach Anspruch 11, **dadurch gekennzeichnet, dass** die Fixiervorrichtungen (124) des Spaltrohres (180) jeweils an den beiden tangentialen Enden einer jeweiligen Fixiervorrichtung (124) liegende Endbereiche (124') aufweist, wobei die Endbereiche (124') derart geformt sind, dass sie, jeweils die formschlüssige Verbindung bildend, in die an den Statorzähnen (122) vorgesehene Ausnehmungen (127) eingreifen, so dass die radiale Fixierung bewirkt wird.

13. Stator (120) nach einem der Ansprüche 8 bis 10, **dadurch gekennzeichnet, dass** die Statorzähne (122) derart ausgebildet sind, dass sich jeweils ein Zahnkopfbereich (122k) eines Statorzahns (122) in positiver und negativer tangentialer Richtung über einen Zahnhalsbereich (122h) dieses Statorzahnes (122) hinaus erstreckt, wobei die somit tangential überhängenden Zahnkopfbereiche (127') die Fixiereinrichtungen (127) dieses Statorzahnes (122) bilden.

14. Elektrische Maschine (100) mit einem Rotor (110) und mit einem Stator (120) nach einem der Ansprüche 8 bis 13.
